# EUROPEAN PATENT SPECIFICATION

(11) **EP 4 368 460 B1**
(45) Date of publication and mention of the grant of the patent: **10.12.2025**
(21) Application number: 22837438.5
(22) Date of filing: 16.06.2022
(51) Int. Cl.: B60R 21/2346, B60R 21/207, B60R 21/233, B60R 21/231, B60R 21/2338

(54) **AIRBAG DEVICE**
AIRBAGVORRICHTUNG
DISPOSITIF DE COUSSIN DE SÉCURITÉ GONFLABLE

(30) Priority: 09.07.2021 JP 2021114627
(43) Date of publication of application: 15.05.2024
(73) Proprietor: Autoliv Development AB, 44783 Vargarda (SE)
(72) Inventor: ISHIGAKI Ryota, Yokohama-shi, Kanagawa 222-8580 (JP); MIURA Yuka, Yokohama-shi, Kanagawa 222-8580 (JP)
(74) Representative: Mewburn Ellis LLP
(86) International application number: PCT/JP2022/024233
(87) International publication number: WO 2023/282020

(56) References cited:
- JP-A- 2006 008 016
- JP-A- 2013 233 863
- JP-A- 2013 252 773
- JP-A- 2019 018 791
- JP-A- 2021 066 426
- US-A1- 2021 094 499

## Description

### TECHNICAL FIELD

The present invention relates to an airbag device equipped in a vehicle, and in particular to an airbag device capable of appropriately controlling the deployment behavior of the airbag.

### CONVENTIONAL TECHNOLOGY

Providing a vehicle with one or a plurality of airbag devices in order to protect an occupant therein in the event of a vehicle accident is well known. There are various forms of airbag devices, such as so-called driver airbag devices that deploy from near the center of a steering wheel to protect a driver, curtain airbags that deploy downward inside a window to protect an occupant in the event of a lateral impact, rollover, or overturning accident, side airbag devices that are deployed to a side of an occupant (side of a seat) to protect the occupant in the event of a lateral impact of the vehicle, and the like.

Side airbag devices restrain the movement of an occupant in a lateral direction using an airbag that deploys to the front from a seat, and such devices capable of protecting not only the body but head of an occupant, as in the invention disclosed in Patent Document 1 for example, have been proposed.

However, with conventional airbag devices such as the airbag device and the like in Patent Document 1, there is difficulty in properly adjusting the deployment speed of the airbag for each part of the body where the occupant is restrained. As a result, there is fear that restraint of critical areas would be delayed.

### PRIOR ART DOCUMENTS

### Patent Document

[Patent Document 1] Japanese Unexamined Patent Application
Publication 2019-137307 [Patent Document 2] JP2021 066426 A and
[Patent Document 3] JP2006008016 A disclose each further airbag devices stored in a vehicle seat.

### SUMMARY OF THE INVENTION

### PROBLEM TO BE SOLVED BY THE INVENTION

In light of the foregoing, an object of the present invention is to provide an airbag device capable of optimally controlling the deployment speed and deployment behavior of an airbag device capable of restraining the torso and head of an occupant.

### MEANS FOR SOLVING THE PROBLEM

To solve the above problem, the present invention provides an airbag device as specified in claim 1.

The "maximum projected area" is, for example, the area of the plane perpendicular to the longitudinal axis when the first opening part is the upper opening of a cylindrical diffuser. If the first opening part is cut at an angle at the top of the cylindrical diffuser, the plane parallel to the inclination angle of the opening part is the reference plane, not the plane orthogonal to the longitudinal axis.

The diffuser is formed in a cylindrical shape having an upper opening and a lower opening, where the first opening corresponds to the upper opening, and the inflator can be inserted into the interior of the diffuser through the lower opening.

The diffuser can be configured to extend from the side cushion to the head protecting cushion.

The side cushion has a side cushion inner panel facing the diffuser inner surface and a side cushion outer panel facing the diffuser outer surface, and the structure is made so that the second opening part in the diffuser faces at least one of the side cushion inner panel and the side cushion outer panel.

The head protecting cushion is preferably configured to deploy prior to the side cushion.

The side cushion is provided on the center side of the vehicle relative to the vehicle seat, and the surface area ratio of the first opening to the second opening can be 3:1 to 4:1.

The downstream end of the diffuser and the inner surface of the head protection cushion can be connected by stitching.

The head protecting cushion can have a first chamber that protects the side of the occupant, a second chamber that connects to the first chamber and protects the front of the head of the occupant, a third chamber that connects to the second chamber and deploys from the front of the head of the occupant across to the other side of the occupant, and a fourth chamber that connects to the third chamber and deploys at the other side of the occupant.

Thus, by surrounding the head of the occupant with airbags on one side, in front, and on the other side, the head of the occupant can be securely restrained regardless of the seat position, reclining angle, and other factors. According to the present invention, there is no need to use the steering wheel, instrument panel, and the like as a reaction surface when the airbag deploys, and stable performance can be achieved independent of the position of the seat and the like.

The first chamber may include an upper direction part that first deploys upward and a forward direction part that is connected to the upper direction part and that deploys forward.

The side cushion can be connected near the lower end of the upper direction part of the first chamber to protect the side of the body of occupant.

### BRIEF DESCRIPTION OF THE DRAWINGS

FIG. 1 is a perspective view depicting mainly the appearance form of a vehicle seat to which the airbag device according to the present invention can be applied, and the depiction of the airbag device is omitted.
FIG. 2 is a perspective view illustrating an internal structure (seat frame) functioning as a framework of the vehicle seat illustrated in FIG. 1, with an illustration of the airbag device omitted.
FIG. 3 is a schematic side surface view of the vehicle seat to which the airbag device according to an embodiment of the present invention has been mounted, depicting a condition where the airbag device is stowed therein, as viewed from the outside in the vehicle width direction.
FIG. 4 is a top side view schematically illustrating a condition where the airbag in the airbag device according to an embodiment of the present invention is deployed.
FIG. 5 is a top side perspective view (overhead view) illustrating a condition where the airbag in the airbag device according to an embodiment of the present invention is deployed.
FIG. 6 is a front side perspective view illustrating a condition where the airbag in the airbag device according to an embodiment of the present invention is deployed.
FIG. 7 is a plan view illustrating the state of a panel that configures the airbag used in the airbag device according to an embodiment of the present invention, which panel forms first and second chambers.
FIG. 8 is a plan view illustrating the state of a panel that configures the airbag used in the airbag device according to an embodiment of the present invention, which panel forms a side chamber.
FIG. 9 is a plan view depicting the structure of the diffuser used in the airbag device according to the embodiment of the present invention, where (A) depicts a folded state forming the diffuser and (B) depicts a spread out state before folding.
FIG. 10 is a schematic illustration to explain the projection plane that is the reference for setting the maximum projected area of the first opening part of the diffuser.
FIG. 11 is a plan view depicting the state of a panel that configures the airbag used in the airbag device according to an embodiment of the present invention, which panel forms a third chamber.
FIG. 12 is a plan view depicting the state of a panel that configures the airbag used in the airbag device according to an embodiment of the present invention, which panel forms a fourth chamber.
FIG. 13 is a plan view for explaining the connective relationship of the panels depicted in FIG. 7 to FIG. 9, FIG. 11, and FIG. 12.
FIG. 14 is a plan view depicting the panels depicted in FIG. 7 to FIG. 9, FIG. 11, and FIG. 12 in a connected state.
FIG. 15 is a cross section view of FIG. 14 in the A-A direction.

### EMBODIMENTS OF THE INVENTION

The airbag device according to the present invention will be described with reference to the accompanying drawings. In the description below, when an occupant is seated in a seat in a normal posture, the direction the occupant faces is referred to as the "front", the opposite direction is referred to as the "back", and the direction indicating the coordinate axis is referred to as the "front-to-back direction". Moreover, when the occupant is seated in the seat in a regular posture, the right of the occupant is referred to as the "right direction", the left of the occupant is referred to as the "left direction", and the direction indicating the coordinate axis is referred to as the "left and right direction". Furthermore, when the occupant is seated in the seat in a regular posture, a head direction of the occupant is referred to as "up", a waist direction of the occupant is referred to as "down", and a direction indicating the coordinate axis is referred to as an "up-down direction". In addition, the side of a deployed airbag facing the occupant (head) is referred to as the inner side and the opposite side is referred to as the outer side.

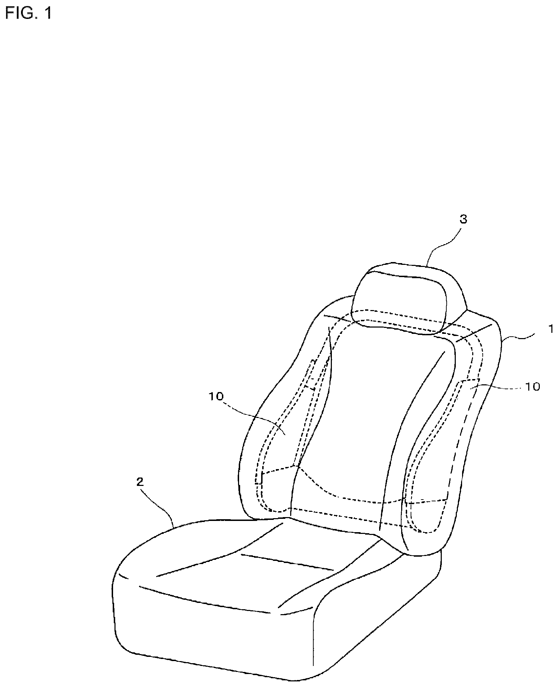

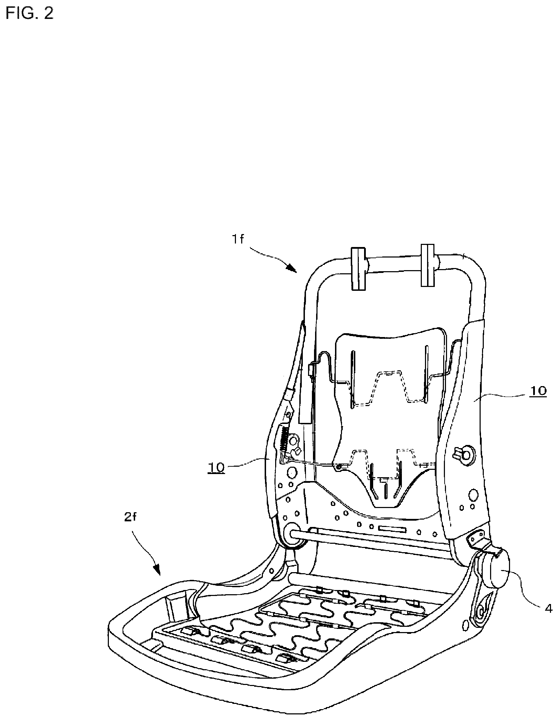

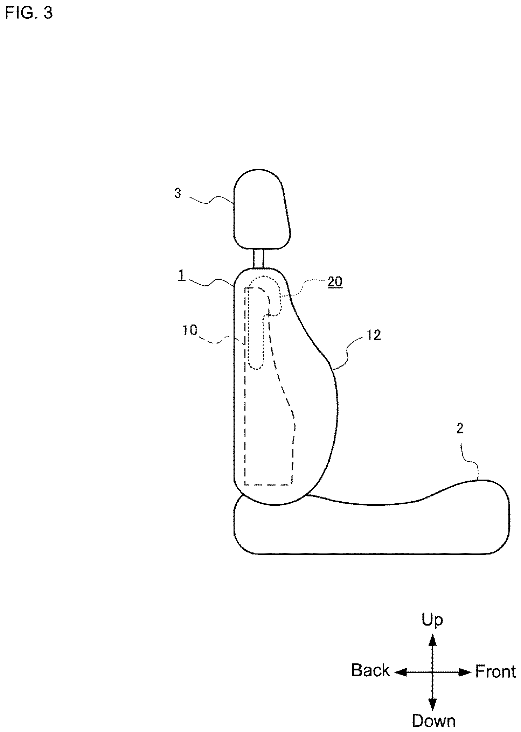

FIG. 1 is a perspective view mainly illustrating the external shape of a vehicle seat used for an occupant protection apparatus according to the present invention, with an illustration of the airbag device (20) omitted. FIG. 2 is a perspective view illustrating an internal structure (seat frame) functioning as a framework of the vehicle seat illustrated in FIG. 1, with an illustration of the airbag device (20) also omitted herein. FIG. 3 is a schematic side view of the occupant protection device according to the present invention, and depicts the state in which the airbag device 20 stowed therein on the side surface (far side) near the door of the vehicle seat is observed from the outside in the vehicle width direction.

As depicted in FIGS. 1 and 2, seen as the location, the vehicle seat to which the present invention can be applied includes: a seat cushion 2 of a part on which an occupant is seated, a seat back 1 forming a backrest, and a headrest 3 connected to the upper end of the seat back 1.

A seat back frame 1f that forms the framework of the seat is provided inside the seat back 1, a pad made of urethane foam or the like is provided on the surface and periphery thereof, and the surface of the pad is covered by a skin, such as leather or fabric. A seating frame 2f is provided on the bottom side of the seat cushion 2, while a pad made of a urethane foaming material, or the like, is provided on the upper surface and periphery thereof, and the surface of this pad is covered with a skin such as leather, fabric, or the like. The seating frame 2f and the seatback frame 1f are connected via a reclining mechanism 4.

As illustrated in FIG. 2, the seat back frame 1f is configured into a frame shape by a seat frame 10 disposed laterally spaced apart and extending in the up-down direction, an upper frame connecting the upper end of the seat frame 10, and a lower frame connecting the lower ends thereof. The headrest 3 is configured by providing a cushioned member on an outer side of a headrest frame.

FIG. 3 is a schematic side surface view of the vehicle seat to which the airbag device 20 according to an embodiment of the present invention has been mounted, depicting a condition where the airbag device 20 is stowed therein, as viewed from the outside in the vehicle width direction.

As illustrated in FIG. 3, the airbag device 20 is stowed near the right side upper end of the seatback 1 of the vehicle seat. Note that, although provided on the so-called far side in the present embodiment, the airbag device 20 may also be provided on the near side.

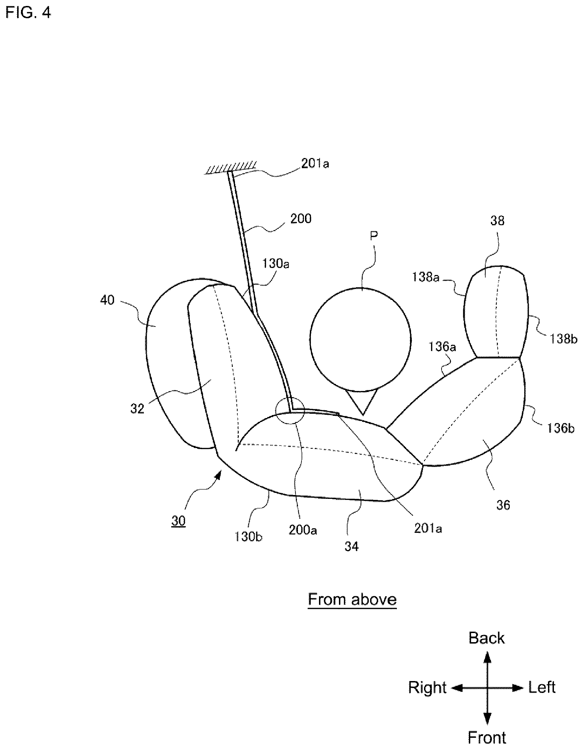

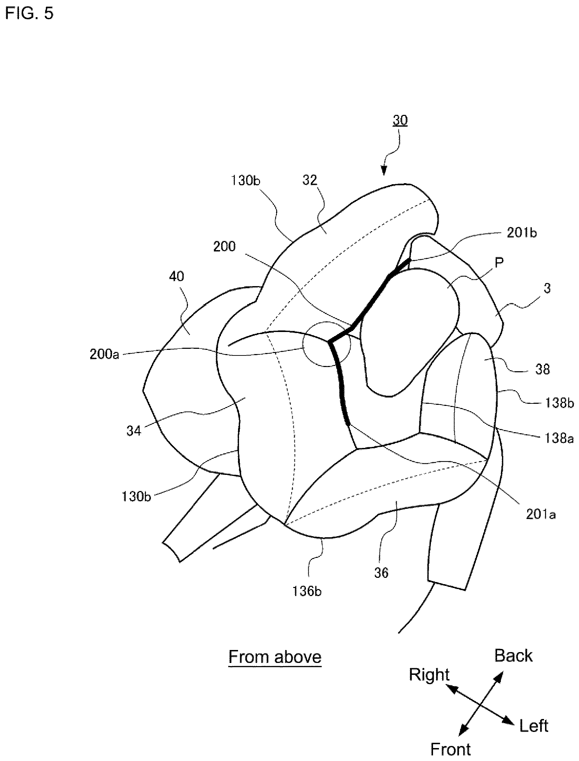

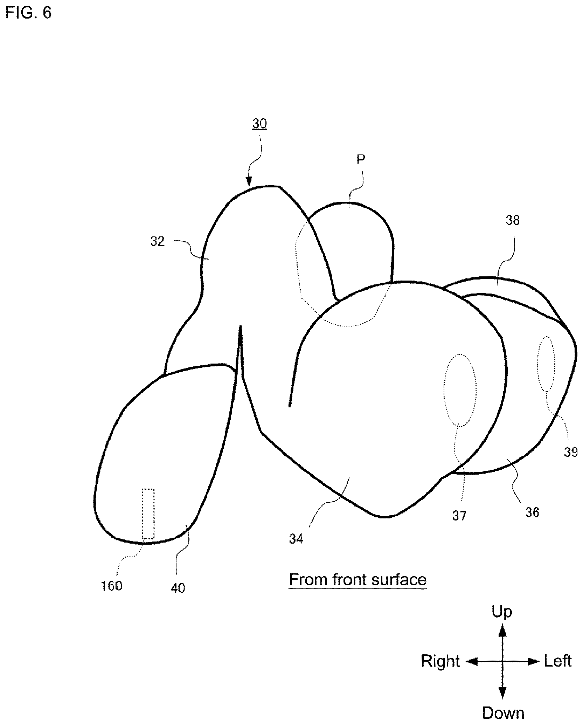

FIG. 4 is a top side view schematically illustrating a condition where the airbag (30) in the airbag device 20 according to an embodiment of the present invention is deployed. FIG. 5 is a top side perspective view (overhead view) illustrating a condition where the airbag (30) is deployed. FIG. 6 is a front side perspective view illustrating a condition where the airbag (30) is deployed. Note that the dashed lines in FIG. 4 and FIG. 5 illustrate stitching lines.

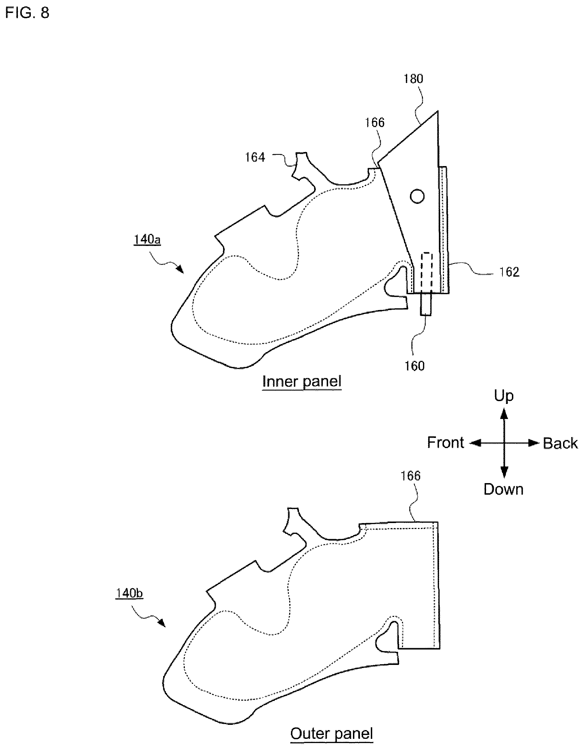

As depicted mainly in FIG. 4, the airbag device 20 according to the present embodiment is provided with an inflator 160 that generates expansion gas (see FIGS. 6 and 8), and an airbag 30 that protects the head area of an occupant P by expanding from around the upper right edge of the vehicle seat. The airbag 30 is provided with a first chamber 32 that protects one side of the head of the occupant P, a second chamber 34 that connects to the first chamber 32 and protects the front of the head of the occupant P, a third chamber 36 that connects to the second chamber 34 and deploys across the front of the head of the occupant P, and a fourth chamber 38 that connects to the third chamber 36 and deploys at the other side of the head of the occupant P. These first through fourth chambers 32, 34, 36, and 38 form the head protecting cushion.

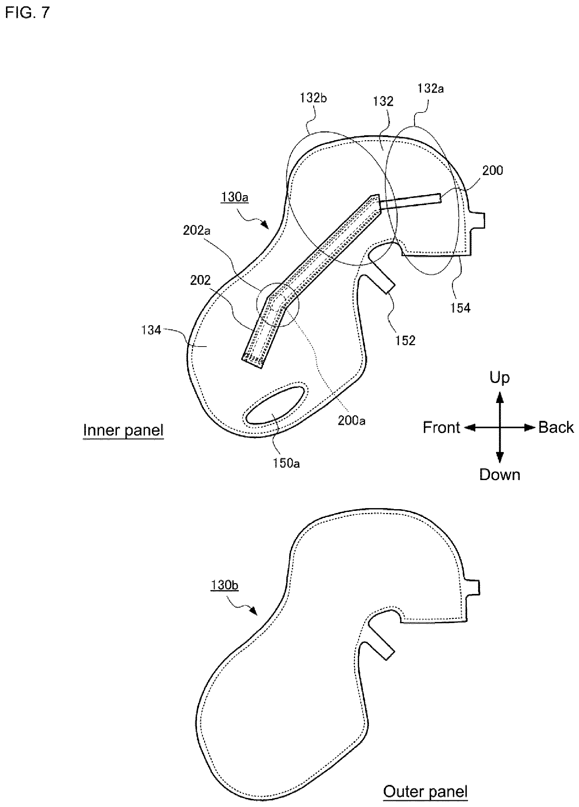

The airbag device 20 also includes a tether 200 that extends in the deployment direction (forward) of the airbag 30 and that regulates the deployment shape of the airbag 30, and a holding member 202 that holds the tether 200 in a slidable state along the surface of the airbag 30. Details of the tether 200 and the holding member 202 are described below with reference to FIG. 7.

The tether 200 includes a first end part 201a that is linked to the inside surface of the second chamber 34, and a second end part 201b on the side opposite the first end part 201a. Additionally, the second end part 201b is linked to a seat frame. Note that the second end part 201b (rear end) of the tether 200 can also link to structural parts other than the seat frame, or directly to near the rear end of the first chamber 32.

The first chamber 32 and the second chamber 34 are formed integrally as a single chamber. A portion near the rear of the second chamber 34 is bent toward the head of the occupant P, which makes it possible for the second chamber 34 to deploy reliably in front of the head of the occupant.

A tether 200 is connected traversing the first chamber 32 and second chamber 34, and the tension of the tether 200 during deployment of the airbag 30 flexes the second chamber 34.

As illustrated in FIG. 4 through FIG. 6, the side chamber 40 is linked below the first chamber 32. Although designed to restrain at least the right shoulder of the occupant P, the side chamber 40 may also be configured to restrain the waist thereof as well. The side chamber 40 and the first chamber 32 are configured so that both deploy simultaneously, or one deploys before the other depending on the direction and timing of the force applied to the occupant P to be protected. As illustrated in FIG. 6 and FIG. 8, inflation gas is released from the inflator 160 stowed in the side chamber 40, and the gas flows sequentially through the first chamber and/or the side chamber 40, the second chamber 34, the third chamber 36, and then the fourth chamber 38. The side chamber 40 corresponds to the "side cushion" described in the claims.

As illustrated in FIG. 4 and FIG. 5, the four chambers (32, 34, 36, and 38) deploy so as to surround a vicinity from near the right side to near the left side of the head of the occupant P. The second chamber 34 simultaneously deploys so as to bend in the direction (inward) of the occupant side from the first chamber 32 and to bend slightly upward as illustrated in FIG. 6 to thus reliably protect the front, including the diagonal front, of the head (face) of the occupant P. The airbag 30 (at least the first chamber 32 and the fourth chamber 38) is positioned above the shoulder of the occupant P, which thus makes it possible to keep the shoulder of the occupant P from interfering with deployment behavior. Furthermore, mounting the airbag 30 above the shoulder of the occupant P can reduce the distance from the airbag 30 to the head of the occupant P, which makes it possible to restrain the head of the occupant quickly.

As illustrated in FIG. 4 and FIG. 5, the longitudinal direction of the second chamber 34, when viewed from the top when the airbag 30 is inflated and deployed, is provided so as to extend in front of the occupant P at an angle from a bent region 200a toward the long longitudinal direction in the front-to-back direction of the first chamber 32. Furthermore, the inflation/deployment direction of the third chamber 36 facing a gas inlet of the fourth chamber 38 from a gas inlet of the third chamber 36, which is near the terminus of the second chamber 34, is provided facing roughly opposite the longitudinal direction inflation/deployment direction of the first chamber 32 in the front-to-back direction, and at an angle in a direction approaching the occupant P from the terminus of the second chamber 34 with respect to the longitudinal direction of the inflated and deployed second chamber 34. Additionally, the inflation/deployment direction of the fourth chamber 38 from a gas inlet of the fourth chamber 38, which is near the terminus of the third chamber 36, is provided facing roughly opposite the longitudinal direction inflation/deployment direction of the first chamber 32 in the front-to-back direction, and at an angle in a direction approaching the occupant side P from the terminus of the third chamber 36 with respect to the inflation/deployment direction of the third chamber 36. By configuring in this way, the airbag 30 inflates and deploys so as to wind around the circumference of the head of the occupant P from one shoulder opening of the occupant P.

FIG. 7 is a plan view illustrating a panel (base fabric) that forms the first chamber 32 and the second chamber 34. As illustrated in FIG. 7, the first chamber 32 and the second chamber 34 are formed integrally by pasting two pieces of base fabric 130a (interior panel) and 130b (exterior panel) together. In the diagram, symbol 132 is a region corresponding to the first chamber 32, and 134 is a region corresponding to the second chamber. When the first chamber 32 and the second chamber 34 deploy the interior panel 130a faces the occupant P side.

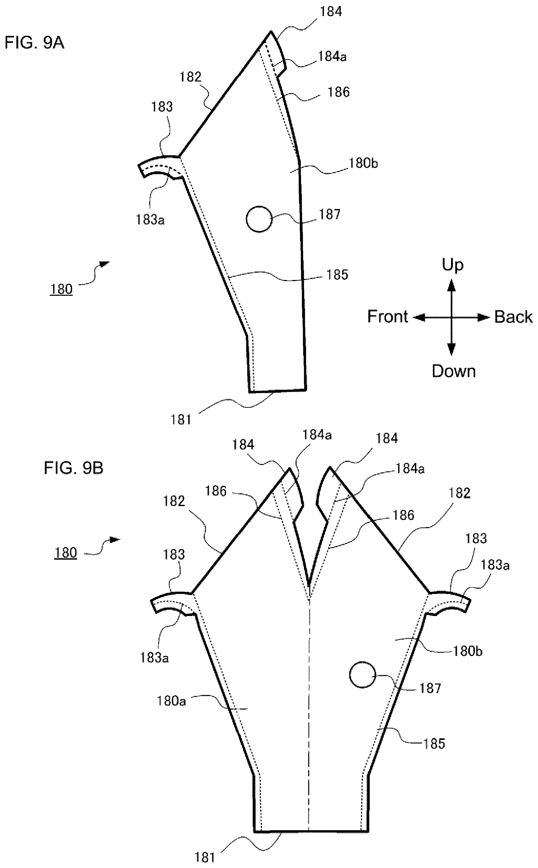

The first chamber 32 (the region 132) includes an opening part 154 that is linked to the side chamber 40, and a tab 152 that is linked to a tab 164 of the side chamber 40. The expansion gas flows into the first chamber 32 from near the rear end part of the side chamber 40 through the opening part 154. A vent opening 150a is formed near the edge of the inner panel of the second chamber 34, extending along the lower edge of the second chamber, in fluid communication with the third chamber 36, together with the vent opening 150b of the inner panel 136a of the third chamber 36 (see FIG. 9), which is connected by stitching around the perimeter. The vent openings 150a, 150b then form vent holes 37.

The first chamber 32 roughly comprises an upper direction part 132a that directs upward the gas flowing in from the opening part 154, and a forward direction part 132b that is connected to said upper direction part 132a and expands toward the front. In FIG. 7, the dashed lines except for the upper direction part 132a and the forward direction part 132b shall indicate stitching lines.

In the first chamber 32, the expansion gas flows first into the upper direction part 132a, which allows the first chamber 32 to be quickly and reliably raised above the shoulders of the occupant P.

FIG. 8 is a plan view of the panels (base fabric) that form the side chamber 40. As depicted in FIG. 8, the side chamber 40 is formed by laminating two generally identically shaped base fabrics 140a (inner panel) and 140b (outer panel). In the diagram, the symbol 166 is an opening connected to the opening part 154a of the first chamber 32, and the symbol 162 is an inflator retaining part that houses the inflator 160. The symbol 164 is a tab that is connected to the tab 152 of the first chamber 32.

The side chamber 40 and the first chamber 32 are directly connected at their respective opening parts 154a and 166, and the deployment orientation can be controlled by connecting the tabs 152 and 164 together. In FIG. 8, the dashed lines except for the 160 inflators shall indicate stitching lines. The connecting tab 164 is located on the upper edge of the side protecting cushion 40. The tab 152 of the first chamber 32 is located on the lower edge of the first chamber, and the connection of these tabs 152 and 164 to each other reduces unintentional pivoting during expansion and deployment of each other, increasing the stability of expansion and deployment. The tabs 152 and 164 are connected to each other so that the airbag cushions do not become disjointed in the direction of expansion and deployment during expansion and deployment, allowing for more integral and comprehensive protection for the occupant P.

As depicted in FIG. 8, a diffuser 180 is inserted and arranged inside the inflator retaining part 162 to direct the gas released from the inflator 160 to the side chamber 40 and the first chamber 32.

FIG. 9 depicts a plan view depicting the structure of the diffuser 180, where (A) depicts a folded state forming the diffuser 180 (complete) and (B) depicts a spread out state before folding. The diffuser 180 is provided around the gas discharge part of the inflator 160 and has a first opening part 182 that connects to the first chamber 32 and a second opening part 187 that connects to the side cushion. In the present Embodiment, the second opening part 187 is a circular hole.

The diffuser 180 has a diffuser inner surface 180a facing the occupant side and a diffuser outer surface 180b on the opposite side, and the second opening part 187 is formed in the diffuser outer surface 180b. The second opening part 187 can be provided on the inner surface 180a instead of the outer surface 180b of the diffuser 180, or even on both the inner surface 180a and the outer surface 180b.

For the first opening part 182 and the second opening part 187, the maximum projected area of the first opening part 182 is larger than that of the second opening part 187 when each is maximally open. Since the second opening part 187 is formed on the side of the diffuser 180, the maximum projected area of the second opening part 187 is the area of the circle on the panel (base fabric).

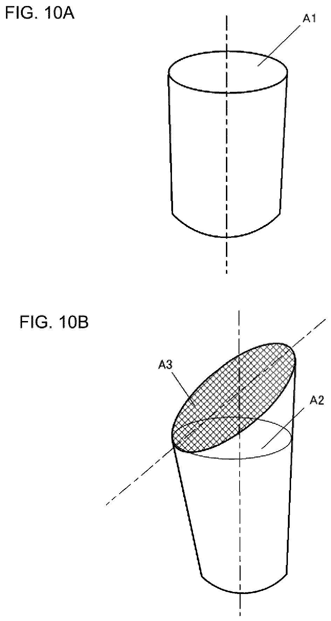

FIG. 10 is a schematic illustration to explain the projection plane that is the reference for setting the maximum projected area of the first opening part 182 of the diffuser 180. For example, when the first opening part is the top opening of a cylindrical diffuser, as depicted in FIG. 10(A), the plane A1 orthogonal to the longitudinal axis is directly the maximum projected area of the projection plane. If the first opening part is cut at an angle, for example, at the top of a cylindrical diffuser, as depicted in FIG. 10(B), the plane A3 parallel to the inclined angle of the opening part, rather than the plane A2 perpendicular to the longitudinal axis, is the reference projection plane for the maximum projection area. In other words, the projected surface of the opening part is the one with the maximum projected area when viewed from a position such that the projected surface of the entire enclosed opening part has the maximum projected area, assuming that the opening part in question is viewed from a position spaced away from the opening part. The position from which the opening part is viewed is vertically away from the center of the projection plane (the center of the diagram of the projection plane), which is the maximum projected area.

In the present Embodiment, the surface area ratio of the first opening part 182 to the second opening part 187 is preferably 3:1 to 4:1. In this case, if multiple second openings 187 are provided, the opening area of the second opening part is the sum of the opening areas of all the second opening parts 187. If the first opening part is relatively smaller than this ratio (less than 3), it may not be possible to ensure a gas flow rate per unit time to fill the head protection cushion within a predetermined time. Since the side chamber is usually located on the far side of the vehicle seat, the side chamber may deploy later than the head protecting cushion, but if the first opening part is relatively larger than this ratio (greater than 4), the gas flow from the second opening part to the side cushion will be narrowed, increasing the delay in deployment time, causing fear that deployment may not be completed in the required time.

The diffuser 180 is formed into a cylindrical shape with an upper opening (first opening part) 182 and a lower opening part 181, and the inflator 160 is inserted through the lower opening part 181 into the interior of the diffuser 180 and secured.

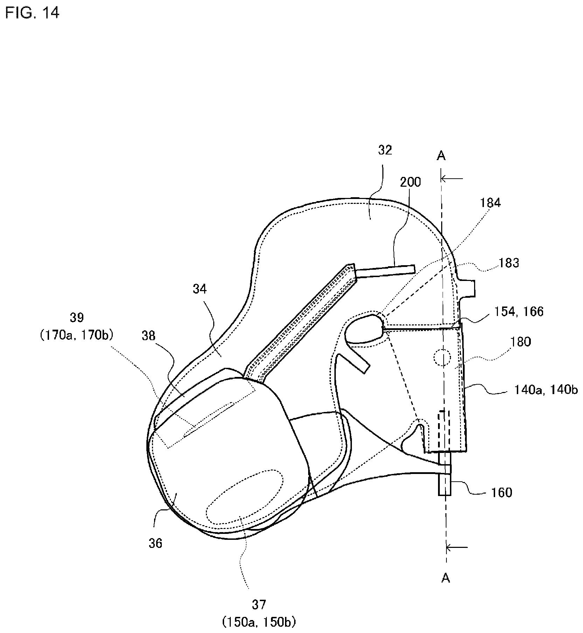

As depicted in FIG. 8 and FIG. 14, the diffuser 180 extends from the side chamber 40 to the interior of the first chamber 32, with the first opening part 182 located within the first chamber 32.

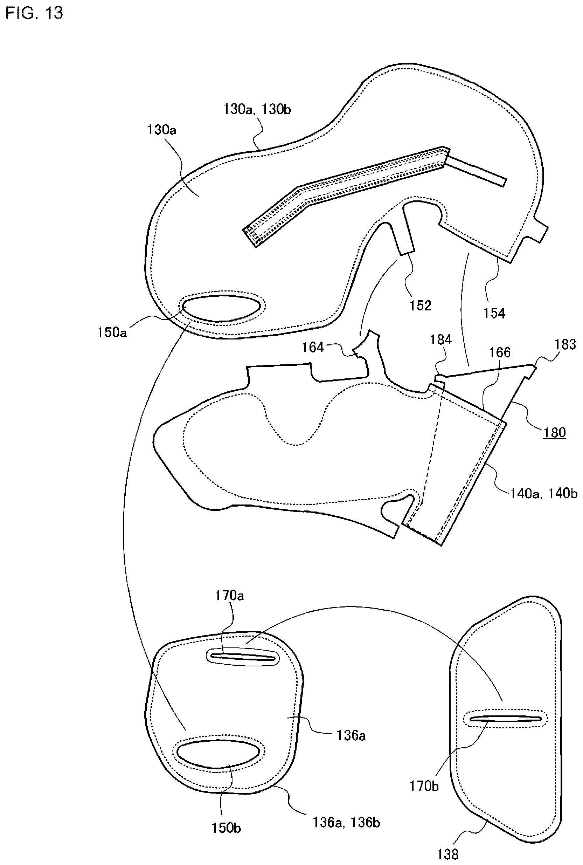

As depicted in FIG. 9(A), the diffuser 180 has tabs 183 and 184 that are connected to the first chamber 32 on both the front and rear sides of the top edge. As also depicted in FIG. 13, these tabs 183 and 184 are stitched along the stitching lines 183a and 184a together with the inner panel 130a and outer panel 130b, which constitute the first chamber 32, to secure the diffuser 180 at two locations on the upper end part thereof.

As depicted in FIG. 9(B), the panels comprising the diffuser 180 are formed symmetrically with and [sic], folded along the centerline, and the inner surface 180a and outer surface 180b are connected to each other by stitching lines 185 and 186 to form a cylindrical shape.

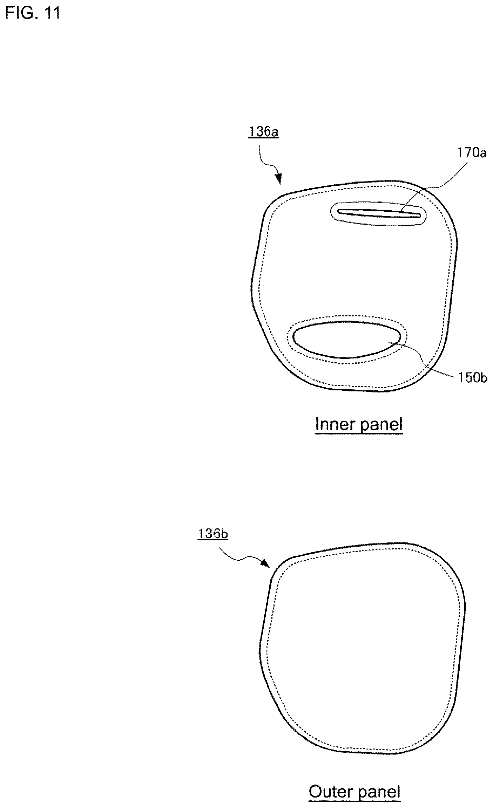

FIG. 11 is a plan view of the panel (base fabric) that forms the third chamber 36. In FIG. 11, the dashed line depicts the stitching line.

As depicted in FIG. 11, the third chamber 36 is formed by pasting two pieces of base fabric 136a (interior panel) and 136b (exterior panel) together. Near one end of the inner panel 136a is a vent opening 150b that is connected to the vent opening 150a of the second chamber 34. A vent opening 170a is formed near the other end of the inner panel 136a, which is connected to the vent opening 170b of the fourth chamber 38. The vent openings 170a and 170b then form vent holes 39 (FIG. 7 and FIG. 11). The vent hole opening 150b is longer in the short direction and has a larger opening area than the vent opening 170a.

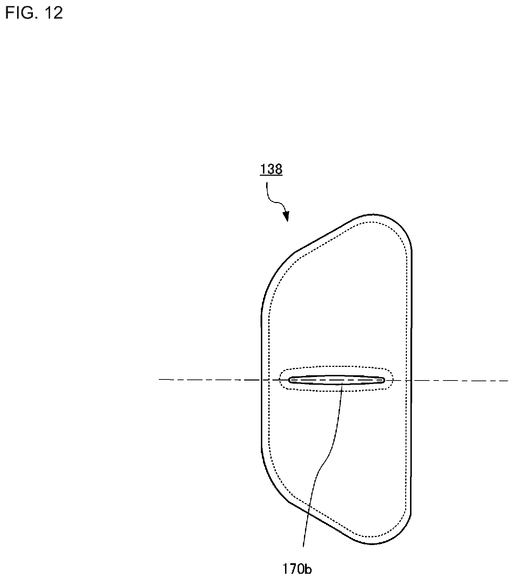

FIG. 12 is a plan view of the panel (base fabric) 138, that forms the fourth chamber 38. In FIG. 12, the dashed line depicts the stitching line.

As depicted in FIG. 12, the fourth chamber 38 is formed into a bag shape by folding one panel 138 in half. A vent hole 170b is formed near the longitudinal center of the panel 138, which is connected to the vent hole 170a of the third chamber, and the center line along the longitudinal direction of this vent opening 170b is the crease of said panel 138.

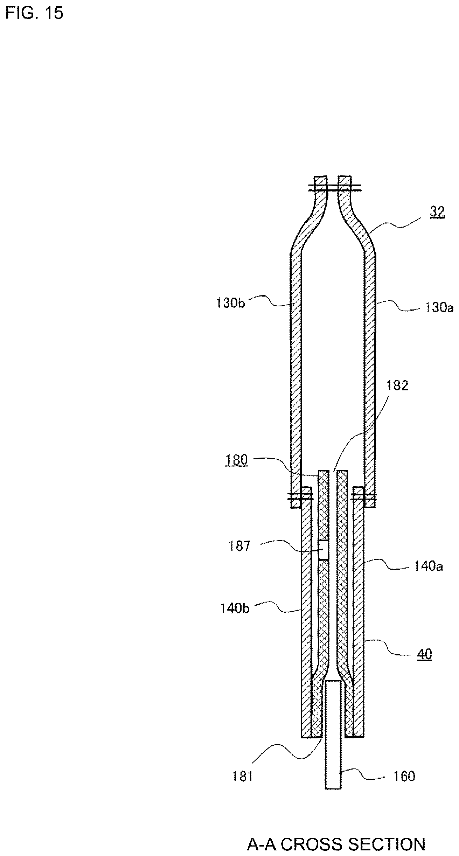

FIG. 13 is a plan view illustrating the connection of the panels depicted in FIG. 7 to FIG. 9, FIG. 11, and FIG. 12. FIG. 14 depicts a plan view of these panels connected together. FIG. 15 is a cross-sectional view of FIG. 14 in the A-A direction.

As depicted in FIG. 12, the chamber integrating the first chamber 32 and second chamber 34 has the largest capacity, followed by the side chamber 40. In contrast, the capacity of the third chamber 36 is small, and the capacity of the fourth chamber 38 is designed to be even smaller.

The second chamber 34 and the third chamber 36 are connected by stitching only around the vent openings 150a and 150b. The third chamber 36 and fourth chamber 38 are connected by stitching only around the vent openings 170a and 170b.

The diffuser 180 is positioned between the inner surface 180a and outer surface 180b of the side chamber 40 and is connected to the first chamber 32 by tabs 183 and 184, as described above. The lower end of the diffuser 180 (second opening part 181), the lower end of the inflator retaining part 162 of the side chamber 40, and the inflator 160 are sealed from the outside of the side chamber 40 by wrapping tape or other means.

### (Airbag Compression)

From the state depicted in FIG. 14, the tether 200 is pulled (maneuvered) backward to form a shrunken area around the tether 200 in the first chamber 32 and second chamber 34, and the upper and lower portions of the shrunken area are bellows-folded toward the center and compressed.

The third chamber 36 and fourth chamber 38 are then bellows-folded together and further rolled. Finally, the compression process of the airbag 30 is completed by folding or rolling the side chamber 40 into a bellows shape.

### (Airbag Deployment Behavior)

As depicted in FIG. 4 to FIG. 6, in the airbag device 20 of the present Embodiment, when a vehicle crash event occurs, the inflator 160 is activated and the expanding gas flows from the first opening part 182 of the diffuser 180 into the first chamber 32 and from the second opening part 187 into the side chamber 40.

As depicted in FIG. 15, the second opening part 187 formed in the inner surface of the diffuser 180 faces in close proximity to the outer panel 140b of the side chamber 40 and cannot be opened wide immediately after the inflator 160 is activated, so most of the expansion gas inside the diffuser 180 is fed into the interior of the first chamber 32 through the opening part 182. Thereafter, a gap is created between the outer panel 140b of the side chamber 40 and the second opening part 187, and the amount of gas flowing into the side chamber 40 from said second opening part 187 increases.

In the present embodiment, the first opening part 182 of the diffuser 180 has a larger area than the second opening part 187, and the second opening part 187 faces the panel of the side chamber 40, so the first chamber 32, second chamber 34, third chamber 36, and fourth chamber 38 will deploy quickly before deployment of the side chamber 40.

When the expansion gas flows into the first chamber 32, the upper direction part 132a (FIG. 7) expands first, followed by the forward direction part 132b. Next, gas flows from the first chamber 32 into the second chamber 34.

Since the tether 200 (FIG. 4) connects the first chamber 32 to the second chamber 34, or the second chamber 34 to the seat frame, the second chamber 34 is restricted from expanding forward, and the flexure 200a of the tether 200, or in other words, the flexing area 202a of the retaining member 202 is curved as the starting point, and deploys toward the front of the occupant (FIG. 4 and FIG. 5). The second chamber 34 is bent so that the tip side faces upward and the vent opening 150a is generally vertical, as depicted in FIG. 6.

Next, expansion gas flows from the second chamber 34 into the third chamber 36 through the vent hole 37, and the third chamber 36 expands from the front of the occupant P to the left side of the head area thereof. Because the inner panel 134a of the second chamber 34 and inner panel 136a of the third chamber 36 are connected around the vent hole 37, the behavior of the third chamber 36 to deploy outward (away from the head of the occupant) is restricted, creating a curved shape around the head of the occupant.

Next, expansion gas flows from the third chamber 36 into the fourth chamber 38 through the vent hole 39, and the fourth chamber 38 expands near the left side of the head of the occupant P. Because the inner panel 136a of the third chamber 36 and the fourth chamber 36 are connected around the vent hole 39, the behavior of the fourth chamber 36 to expand outward (away from the head of the occupant) is restricted, creating a curved shape around the head of the occupant P. These structures allow the airbag 30 to expand and deploy so as to wrap around the head of the occupant P.

In the present embodiment, the configuration is such that the tether 200 slides along the surface of the airbag 30 such that the tether 200 does not protrude like a bridge from the surface of the airbag 30, and unnecessary interference with the occupant P can be avoided. The structure also enables reliable and precise control of the deployed shape of the airbag 30.

The described embodiments may take on various modifications. For example, while a side airbag on the far side has been predominantly mentioned in the Embodiment in the Description of the Preferred Embodiment, use is also possible with a near side airbag (surface on the far side from a vehicle door of a vehicle seat), in very small vehicles such as a single seat vehicle (irrespective of the presence of a door, a vehicle including parts with only one seat in a single row), and the like.

## Claims

1. An airbag device (20) stored in a vehicle seat, comprising:
an inflator (160) for generating inflation gas; and
an airbag (30) that protects the occupant by deploying from the side of the vehicle seat, wherein
the airbag includes a head protecting cushion (32, 34, 36, 38) that deploys at least at the side of the head of the occupant and a side cushion (40) that deploys at the side of the shoulder and waist of the occupant,
the inflator is equipped with a gas discharge part and is installed so that at least the gas discharge part is housed inside the side cushion,
a diffuser (180) is provided inside the airbag to cover the perimeter of the gas discharge part of the inflator,
the diffuser has a first opening part (182) that connects to the head protecting cushion and a second opening part (187) that connects to the side cushion,
for the first opening part and second opening part, the maximum projected area, when each are opened to their maximum, is set larger for the first opening part than the second opening part, and
the diffuser has a diffuser inner surface (180a) facing the occupant side and a diffuser outer surface (180b) on the opposite side, and where the second opening part is formed in at least one of the diffuser inner and outer surfaces.

2. The airbag device according to claim 1, wherein the diffuser is formed in a cylindrical shape having an upper opening (182) and lower opening (181), the first opening corresponds to the upper opening, and where the inflator is inserted into the interior of the diffuser through the lower opening.

3. The airbag device according to claim 1 or 2, wherein the diffuser extends from the side cushion to the head protecting cushion.

4. The airbag device according to claim 1, wherein the side cushion has a side cushion inner panel facing the diffuser inner surface and a side cushion outer panel facing the diffuser outer surface, and where the second opening part of the diffuser faces at least one of the side cushion inner panel and side cushion outer panel.

5. The airbag device according to claim 1 or 2, wherein the head protecting cushion is deployed prior to the side cushion.

6. The airbag device according to claim 1 or 2, wherein the side cushion is provided on the center side of the vehicle relative to the vehicle seat, and the surface area ratio of the first opening part and second opening part is 3:1 to 4:1.

7. The airbag device according to claim 1 or 2, wherein the downstream end of the diffuser and the inner surface of the head protecting cushion are connected by stitching.

8. The airbag device according to claim 1 or 2, wherein the head protecting cushion is provided with:
a first chamber (32) that protects the side of the occupant;
a second chamber (34) that is connected to the first chamber and protects the front of the head of the occupant;
a third chamber (36) that is connected to the second chamber and deploys from the front of the head of the occupant across to the other side of the occupant; and
a fourth chamber (38) that is connected to the third chamber and deploys on the other side of the occupant.

9. The airbag device according to claim 8, wherein the first chamber includes an upper direction part (132a) for first deploying upward and a front direction part (132b) connected to the upper direction part and for deploying toward the front.

10. The airbag device according to claim 9, wherein the side cushion is connected near the lower end of the upper direction part of the first chamber and protects the side of the torso of the occupant.

## Patentansprüche

1. In einem Fahrzeugsitz untergebrachte Airbagvorrichtung (20), die Folgendes umfasst: einen Gasgenerator (160) zum Erzeugen von Füllgas; und
einen Airbag (30), der den Insassen schützt, indem er sich seitlich am Fahrzeugsitz entfaltet, wobei
der Airbag ein Kopfschutzkissen (32, 34, 36, 38) einschließt, das sich mindestens seitlich am Kopf des Insassen entfaltet, und ein Seitenkissen (40), das sich seitlich an Schulter und Hüfte des Insassen entfaltet,
der Gasgenerator mit einem Gasauslassteil ausgestattet und derart eingebaut ist, dass mindestens das Gasauslassteil im Inneren des Seitenkissens untergebracht ist,
ein Diffusor (180) im Inneren des Airbags bereitgestellt ist, um den Umfang des Gasauslassteils des Gasgenerators abzudecken,
der Diffusor einen ersten Öffnungsteil (182) aufweist, der mit dem Kopfschutzkissen verbunden ist, und einen zweiten Öffnungsteil (187), der mit dem Seitenkissen verbunden ist,
für den ersten und den zweiten Öffnungsteil die maximale Projektionsfläche, wenn sie jeweils maximal geöffnet sind, für den ersten Öffnungsteil größer eingestellt ist als für den zweiten Öffnungsteil, und
der Diffusor eine der Insassenseite zugewandte Diffusorinnenfläche (180a) und eine Diffusoraußenfläche (180b) auf der gegenüberliegenden Seite aufweist, und wobei der zweite Öffnungsteil in mindestens einer der Diffusorinnen- und -außenflächen ausgebildet ist.

2. Airbagvorrichtung nach Anspruch 1, wobei der Diffusor eine zylindrische Form mit einer oberen Öffnung (182) und einer unteren Öffnung (181) aufweist, wobei die erste Öffnung der oberen Öffnung entspricht und wobei der Gasgenerator durch die untere Öffnung in das Innere des Diffusors eingesetzt wird.

3. Airbagvorrichtung nach Anspruch 1 oder 2, wobei sich der Diffusor vom Seitenkissen zu dem Kopfschutzkissen erstreckt.

4. Airbagvorrichtung nach Anspruch 1, wobei das Seitenkissen eine der Innenfläche des Diffusors zugewandte Innenfläche des Seitenkissens und eine der Außenfläche des Diffusors zugewandte Außenfläche des Seitenkissens aufweist, und wobei der zweite Öffnungsteil des Diffusors mindestens einer der Innenfläche des Seitenkissens und der Außenfläche des Seitenkissens zugewandt ist.

5. Airbagvorrichtung nach Anspruch 1 oder 2, wobei das Kopfschutzkissen vor dem Seitenkissen entfaltet wird.

6. Airbagvorrichtung nach Anspruch 1 oder 2, wobei das Seitenkissen auf der Mittelseite des Fahrzeugs relativ zum Fahrzeugsitz bereitgestellt ist und das Oberflächenverhältnis des ersten Öffnungsteils und des zweiten Öffnungsteils 3:1 bis 4:1 beträgt.

7. Airbagvorrichtung nach Anspruch 1 oder 2, wobei das stromabwärtige Ende des Diffusors und die Innenfläche des Kopfschutzkissens durch Nähen verbunden sind.

8. Airbagvorrichtung nach Anspruch 1 oder 2, wobei das Kopfschutzkissen bereitgestellt ist mit:
einer ersten Kammer (32), die die Seite des Insassen schützt;
eine zweite Kammer (34), die mit der ersten Kammer verbunden ist und die Vorderseite des Kopfes des Insassen schützt;
eine dritte Kammer (36), die mit der zweiten Kammer verbunden ist und sich von der Vorderseite des Kopfes des Insassen hinüber zur anderen Seite des Insassen entfaltet; und
eine vierte Kammer (38), die mit der dritten Kammer verbunden ist und sich auf der anderen Seite des Insassen entfaltet.

9. Airbagvorrichtung nach Anspruch 8, wobei die erste Kammer einen oberen Richtungsteil (132a) zum Entfalten zunächst nach oben und einen vorderen Richtungsteil (132b) einschließt, der mit dem oberen Richtungsteil verbunden ist und sich nach vorn entfaltet.

10. Airbagvorrichtung nach Anspruch 9, wobei das Seitenkissen nahe dem unteren Ende des oberen Richtungsteils der ersten Kammer verbunden ist und die Seite des Rumpfes des Insassen schützt.

## Revendications

1. Dispositif de coussin de sécurité gonflable (20) stocké dans un siège de véhicule, comprenant : un gonfleur (160) pour générer un gaz de gonflage ; et
un coussin de sécurité gonflable (30) qui protège l'occupant en se déployant à partir du côté du siège de véhicule, dans lequel
le coussin de sécurité gonflable comporte un coussin de protection de la tête (32, 34, 36, 38) qui se déploie au moins au niveau du côté de la tête de l'occupant et un coussin latéral (40) qui se déploie au niveau du côté de l'épaule et de la taille de l'occupant,
le gonfleur est équipé d'une partie d'évacuation de gaz et est installé de sorte qu'au moins la partie d'évacuation de gaz est logée à l'intérieur du coussin latéral,
un diffuseur (180) est prévu à l'intérieur du coussin de sécurité gonflable pour couvrir le périmètre de la partie d'évacuation de gaz du gonfleur,
le diffuseur a une première partie d'ouverture (182) qui se relie au coussin de protection de la tête et une seconde partie d'ouverture (187) qui se relie au coussin latéral,
pour la première partie d'ouverture et la seconde partie d'ouverture, l'aire projetée maximale, lorsque chacune est ouverte à son maximum, est fixée plus grande pour la première partie d'ouverture que pour la seconde partie d'ouverture, et
le diffuseur a une surface interne (180a) de diffuseur faisant face vers le côté d'occupant et une surface externe (180b) de diffuseur sur le côté opposé, et où la seconde partie d'ouverture est formée dans au moins l'une des surfaces interne et externe de diffuseur.

2. Dispositif de coussin de sécurité gonflable selon la revendication 1, dans lequel le diffuseur est formé en une forme cylindrique ayant une ouverture supérieure (182) et une ouverture inférieure (181), la première ouverture correspond à l'ouverture supérieure, et où le gonfleur est inséré dans l'intérieur du diffuseur à travers l'ouverture inférieure.

3. Dispositif de coussin de sécurité gonflable selon la revendication 1 ou 2, dans lequel le diffuseur s'étend du coussin latéral au coussin de protection de la tête.

4. Dispositif de coussin de sécurité gonflable selon la revendication 1, dans lequel le coussin latéral a un panneau interne de coussin latéral faisant face vers la surface interne de diffuseur et un panneau externe de coussin latéral faisant face à la surface externe de diffuseur, et dans lequel la seconde partie d'ouverture du diffuseur fait face à au moins l'un du panneau interne de coussin latéral et du panneau externe de coussin latéral.

5. Dispositif de coussin de sécurité gonflable selon la revendication 1 ou 2, dans lequel le coussin de protection de la tête est déployé avant le coussin latéral.

6. Dispositif de coussin de sécurité gonflable selon la revendication 1 ou 2, dans lequel le coussin latéral est fourni sur le côté central du véhicule par rapport au siège de véhicule, et le rapport d'aire de surface de la première partie d'ouverture et de la seconde partie d'ouverture est de 3:1 à 4:1.

7. Dispositif de coussin de sécurité gonflable selon la revendication 1 ou 2, dans lequel l'extrémité aval du diffuseur et la surface interne du coussin de protection de la tête sont reliées par couture.

8. Dispositif de coussin de sécurité gonflable selon la revendication 1 ou 2, dans lequel le coussin de protection de la tête est fourni avec :
une première chambre (32) qui protège le côté de l'occupant ;
une deuxième chambre (34) qui est reliée à la première chambre et protège l'avant de la tête de l'occupant ;
une troisième chambre (36) qui est reliée à la deuxième chambre et se déploie à partir de l'avant de la tête de l'occupant à travers jusqu'à l'autre côté de l'occupant ; et
une quatrième chambre (38) qui est reliée à la troisième chambre et se déploie sur l'autre côté de l'occupant.

9. Dispositif de coussin de sécurité gonflable selon la revendication 8, dans lequel la première chambre comporte une partie de direction supérieure (132a) pour un premier déploiement vers le haut et une partie de direction avant (132b) reliée à la partie de direction supérieure et pour un déploiement vers l'avant.

10. Dispositif de coussin de sécurité gonflable selon la revendication 9, dans lequel le coussin latéral est relié près de l'extrémité inférieure de la partie de direction supérieure de la première chambre et protège le côté du torse de l'occupant.
